# FASCICULE DE BREVET EUROPEEN

(11) **EP 3 028 396 B1**
(45) Date de publication et mention de la délivrance du brevet: **28.06.2017**
(21) Numéro de dépôt: 14750582.0
(22) Date de dépôt: 24.07.2014
(51) Int. Cl.: H04L 1/08, H04W 74/08

(54) **RECEPTION DE DONNEES PAR PAQUETS A TRAVERS UN CANAL DE TRANSMISSION A ACCES MULTIPLE**
EMPFANG VON PAKETDATEN ÜBER EINEN MEHRFACHZUGRIFFS-ÜBERTRAGUNGSKANAL
RECEPTION OF PACKET DATA THROUGH A MULTIPLE ACCESS TRANSMISSION CHANNEL

(30) Priorité: 01.08.2013 FR 1357675
(43) Date de publication de la demande: 08.06.2016
(73) Titulaire: Institut Supérieur De L'Aéronautique Et De L'Espace, 31055 Toulouse Cedex 4 (FR); Institut National Polytechnique de Toulouse, 31209 Toulouse Cedex 4 (FR); Centre National de la Recherche Scientifique (C.N.R.S.), 75016 Paris (FR)
(72) Inventeur: LACAN, Jérôme, F-31400 Toulouse (FR); BUI, Huyen Chi, F-31400 Toulouse (FR); BOUCHERET, Marie-Laure, F-31120 Goyrans (FR)
(74) Mandataire: Cabinet Plasseraud
(86) Numéro de dépôt international: PCT/FR2014/051926
(87) Numéro de publication internationale: WO 2015/015099

(56) Documents cités:
- EP-A1- 1 492 293
- EP-A1- 1 686 746
- US-A1- 2009 059 883

## Description

### Domaine technique

La présente invention se rapporte à la réception de données à travers un canal de transmission à accès multiple. Plus particulièrement, elle concerne les procédés et dispositifs permettant de localiser et décoder des répliques de paquets transmises via un canal, tel un canal de transmission à accès multiple.

### Technique antérieure

Un des plus grands défis dans le domaine des communications sans fil est de pouvoir faire face, au niveau d'un récepteur, à la réception d'une pluralité de signaux arrivant simultanément et provenant de plusieurs sources différentes. Le document EP16866746 en donne un exemple. En effet, cette pluralité de signaux arrivant simultanément est, du point de vue de chaque signal, source d'interférences qui peuvent entraîner la perte de certaines ou de toutes les données transportées. Ces pertes de données sont les principales causes de la réduction des débits qui peut être observée dans les réseaux de communications sans fil.

Pour pallier ce problème, la plupart de ces réseaux de communication sans fil disposent de mécanismes pour réduire ou éviter les interférences.

D'autres mécanismes, au lieu de traiter des interférences comme des nuisances à éviter, encouragent l'utilisation des interférences de façon intelligente. C'est notamment le cas de la technique de codage réseau couche physique (Physical Layer Network Coding, PNC, en anglais, ci-après dénommé le codage PNC ou simplement le PNC) qui a pour objectif d'éliminer l'effet destructeur des interférences dans les réseaux de communication sans fil permettant ainsi d'en augmenter la capacité de manière significative. En effet, le PNC est fondée sur l'idée que les signaux reçus simultanément à partir des différentes sources sont une superposition additive de signaux électromagnétiques. Ainsi, en fusionnant le décodage de signal et l'arithmétique du codage réseau au niveau physique il est alors possible de récupérer de l'information utile à partir de cette superposition de signaux même lorsque des signaux sont en collision.

Récemment, l'agence spatiale européenne (ESA) a proposé un protocole d'accès nommé CRDSA (Contention Resolution Diversity Slotted ALOHA, en anglais). Ce protocole se base sur le codage PNC et l'élimination d'interférences successives (Successive Interference cancellation, SIC, en anglais) pour résoudre le problème de collision sur une voie de retour à accès aléatoire multiple découpée en trames comportant des intervalles de temps et/ou de fréquence.

Le principe de CRDSA consiste en la transmission, dans les intervalles, de plusieurs copies ou répliques d'un même paquet de données de façon aléatoire sur le canal de communication. Chacune des copies contient une information de signalisation indiquant la position respective de la ou des autres répliques du même paquet. A la réception du signal correspondant, un décodeur parcourt toute la trame pour essayer de décoder une ou plusieurs répliques d'un paquet donné. Une réplique est décodable si et seulement si elle n'est pas en collision avec d'autres répliques dans un même intervalle de temps et/ou de fréquence. Dès qu'une réplique est décodée, le signal correspondant est généré. Puis, grâce à l'utilisation de l'information de signalisation contenue dans le signal généré, il est possible de déterminer la position des autres répliques dans la trame. Ensuite, chacune de ces répliques permet de régénérer un signal qui peut être soustrait du signal reçu dans l'intervalle de temps et/ou de fréquence de manière à libérer le signal global des effets de l'interférence correspondant à cette réplique. Ce processus est itératif jusqu'à ce que le récepteur arrive à décoder le paquet en cours de traitement, ou bien arrive à une situation de blocage dans laquelle plus aucun autre décodage n'est possible, auquel cas le processus s'arrête sur un échec.

Cette situation de blocage met en lumière une des faiblesses de ce procédé qui réside dans le fait que le décodage n'est possible si et seulement si une réplique d'un paquet n'est pas en collision avec d'autres répliques dans un intervalle de temps et/ou de fréquence. Or, il peut arriver des situations où l'ensemble des intervalles de temps et/ou de fréquence comportent des collisions rendant ainsi inopérant le procédé tel que décrit ci-dessus.

### Exposé de l'invention

La présente invention vise à pallier cet inconvénient de l'art antérieur en proposant un récepteur ainsi que des procédés et dispositifs de localisation et de décodage permettant de localiser et de décoder une ou plusieurs répliques d'un seul et même paquet déterminé, et ce même lorsque celles-ci sont en collision avec d'autres répliques, i.e. des répliques d'un autre (ou d'autres) paquet(s). Grâce à l'invention, il est ainsi possible de diminuer le taux de perte des paquets qui transitent sur un canal à accès multiple d'un système de communication sans fil, ce qui permet d'augmenter la performance en termes de débit du système.

A cet effet, selon un premier aspect de l'invention, il est visé un dispositif de localisation au niveau d'un récepteur, de la position d'au moins deux répliques d'un paquet de données qui sont transmises via un canal de transmission à accès multiple par répartition dans le temps et/ou en fréquence. Le dispositif comprend :
- une unité d'identification de collisions configurée pour identifier, dans un signal reçu par le récepteur, l'ensemble des intervalles de temps et/ou de fréquence comprenant des collisions destructives, appelés ci-après intervalles de collisions, au moins entre une réplique d'un premier paquet et une réplique d'un second paquet, différent du premier paquet.
Le dispositif est caractérisé en ce qu'il comprend en outre :
- une unité de sélection configurée pour :
   - sélectionner tout ou partie des données comprises dans au moins un des intervalles de collisions du signal ;
   - identifier les données sélectionnées comme étant un motif de référence comprenant au moins une réplique du premier paquet de données ;
- une unité de corrélation configurée pour :
   - obtenir au moins une valeur de corrélation associée à un intervalle de collisions donné, à partir d'un calcul de corrélation entre tout ou partie du motif de référence et tout ou partie des données reçues dans l'intervalle de collisions ; et,
   - déterminer qu'au moins une des répliques du premier paquet de données est localisée dans l'intervalle de collisions donné si la valeur de corrélation associée est supérieure à un seuil de corrélation déterminé.

Grâce à ces dispositions, il est possible de localiser la position des répliques d'un paquet de données sans besoin de démoduler au préalable le signal correspondant à une réplique. Ainsi, contrairement à l'art antérieur, il n'est pas nécessaire d'introduire des pointeurs au sein des répliques qui lorsque celles-ci sont décodées permettent de connaître la position des autres répliques à partir de la connaissance de la position d'une seule pour ensuite les démoduler. De ce fait, l'invention permet de localiser plusieurs répliques d'un paquet avant l'opération de décodage, c'est-à-dire plus rapidement que dans l'art antérieur.

Selon un mode de réalisation du premier aspect de l'invention, l'unité de corrélation effectue le calcul de corrélation, en bande de base, par l'utilisation d'au moins une technique de corrélation glissante ou une technique de corrélation non-glissante.

Il est avantageux de pouvoir calculer la corrélation à la donnée près ou à partir de blocs de données selon les besoins d'implémentation.

L'invention vise également dans un deuxième aspect, un dispositif de décodage au niveau d'un récepteur, d'un canal de transmission à accès multiple par répartition dans le temps et/ou en fréquence à partir d'un signal reçu par le récepteur et comprenant une pluralité de répliques de paquets de données dans laquelle :
- au moins deux répliques de chaque paquet sont transmises ; et,
- la position d'au moins deux répliques d'un premier paquet a été localisée, à partir du signal reçu, par un dispositif de localisation selon le premier aspect de l'invention dans au moins un intervalle de temps et/ou de fréquence comprenant des collisions destructives, appelés ci-après intervalles de collisions, au moins entre une réplique du premier paquet et une réplique d'un second paquet, différent du premier paquet. Le dispositif est caractérisé en ce qu'il comprend :
- une unité de démodulation configurée pour démoduler les signaux correspondant à au moins deux répliques du premier paquet, à partir d'une somme entre un signal correspondant au motif de référence et au moins un signal correspondant aux données comprises dans l'intervalle de collisions utilisé dans le calcul de corrélation, lorsque la somme comprend un niveau de bruit situé au-dessous d'un seuil de bruit déterminé ; et,
- une unité de soustraction d'interférences couplée de façon fonctionnelle à l'unité de démodulation et configurée pour soustraire en bande de base au moins le signal démodulé, des intervalles de collisions.

Grâce à ces dispositions, il est possible de décoder des répliques de paquets comprises dans des intervalles comprenant des collisions destructives et de soustraire les données démodulées pour réduire le niveau d'interférences subi par le signal reçu.

Selon un mode de réalisation du deuxième de l'invention, l'unité de démodulation est en outre configurée pour ajouter à la somme, les données comprises dans au moins un des intervalles de collisions comprenant une ou plusieurs des autres répliques de premier paquet et localisées par le dispositif de localisation selon le premier aspect de l'invention.

Selon un autre mode de réalisation du deuxième de l'invention l'unité de démodulation est en outre configurée pour estimer des paramètres de fréquence, de temporisation, de phase et d'amplitude de chaque réplique à partir d'au moins la somme.

L'invention vise aussi dans un troisième aspect, un récepteur adapté pour recevoir un signal transmis via un canal de transmission à accès multiple par répartition dans le temps et/ou en fréquence, le signal comprenant des paquets de données pour lesquels au moins deux répliques de chaque paquet sont transmises. Le récepteur est caractérisé en ce qu'il comprend :
- un dispositif de localisation selon le premier aspect de l'invention ;
- un dispositif de décodage selon le deuxième aspect de l'invention, couplé de façon fonctionnelle au dispositif de localisation ;
- une unité de traitement couplée de façon fonctionnelle aux premiers dispositifs de localisation et de décodage et configurée pour recevoir le signal.

Selon un des modes de réalisation du troisième aspect de l'invention, le récepteur comprend en outre :
- un dispositif de décodage selon le procédé Contention Resolution Diversity Slotted Aloha, CDRSA, et couplé de façon fonctionnelle à l'unité de traitement.

Il est avantageux de pouvoir coupler le récepteur selon l'invention avec des éléments selon un procédé tel CRDSA car cette intégration ne nécessite aucune modification du procédé CRDSA ni d'un récepteur fonctionnant selon le procédé CRDSA. Au contraire, les deux sont parfaitement complémentaires.

Par exemple, selon un mode de réalisation du troisième aspect de l'invention, l'unité de traitement est en outre configurée pour :
- activer le dispositif de décodage CRDSA ; et,
- désactiver le dispositif de localisation et le dispositif de décodage, tant que le signal reçu comprend au moins un intervalle de temps et/ou de fréquence sans collisions destructives.

Il est avantageux de pouvoir désactiver les éléments du récepteur selon l'invention pour économiser de l'énergie lorsque le signal reçu peut être traité selon le procédé CRDSA, c'est-à-dire lorsqu'il n'y a pas de situation de blocage.

Selon un autre mode de réalisation du troisième aspect de l'invention l'unité de traitement est en outre configurée pour :
- activer le dispositif de localisation et le dispositif de décodage ; et,
- désactiver le dispositif de décodage CRDSA, tant que le signal reçu ne comprend que des intervalles de collisions.

Il est avantageux de pouvoir désactiver les éléments du récepteur selon le procédé CRDSA lorsque ces derniers ne sont plus utilisés, et ce afin d'économiser de l'énergie, notamment dans le cas d'une situation de blocage dans laquelle le procédé CRSDA n'est pas apte à fonctionner tandis que l'invention peut l'être.

L'invention vise par ailleurs dans un quatrième aspect, un procédé de localisation au niveau d'un récepteur, de la position d'au moins deux répliques d'un paquet de données qui sont transmises via un canal de transmission à accès multiple par répartition dans le temps et/ou en fréquence. Le procédé comprenant l'étape consistant à :
- identifier, dans un signal reçu par le récepteur, l'ensemble des intervalles de temps et/ou de fréquence comprenant des collisions destructives, appelés ci-après intervalles de collisions, au moins entre une réplique d'un premier paquet et une réplique d'un second paquet, différent du premier paquet.
Le procédé est caractérisé en ce qu'il comprend les étapes supplémentaires consistant à :
- sélectionner tout ou partie des données comprises dans au moins un des intervalles de collisions du signal ;
- identifier les données sélectionnées comme étant un motif de référence comprenant au moins une réplique du premier paquet de données ;
- obtenir au moins une valeur de corrélation associée à un intervalle de collisions donné, à partir d'un calcul de corrélation entre tout ou partie du motif de référence et tout ou partie des données reçues dans le intervalle de collisions ;
- déterminer qu'au moins une des répliques du premier paquet de données est localisée dans l'intervalle de collisions donné si la valeur de corrélation associée est supérieure à une valeur de corrélation déterminée.

D'autre part, dans un cinquième aspect, l'invention vise un procédé de décodage au niveau d'un récepteur, d'un canal de transmission à accès multiple par répartition dans le temps et/ou en fréquence à partir d'un signal reçu par le récepteur et comprenant une pluralité de répliques de paquets de données dans laquelle :
- au moins deux répliques de chaque paquet sont transmises ; et,
- la position d'au moins deux répliques d'un premier paquet a été localisée, à partir du signal reçu, par un procédé de localisation selon le quatrième aspect de l'invention dans au moins un intervalle de temps et/ou de fréquence comprenant des collisions destructives, appelés ci-après intervalles de collisions, au moins entre une réplique du premier paquet et une réplique d'un second paquet, différent du premier paquet. Le procédé est caractérisé en ce qu'il comprend les étapes consistant à :

- démoduler les signaux correspondant à au moins deux répliques du premier paquet, à partir d'une somme entre un signal correspondant au motif de référence et au moins un signal correspondant aux données comprises dans l'intervalle de collisions utilisé dans le calcul de corrélation, lorsque la somme comprend un niveau de bruit situé au-dessous d'un seuil de bruit déterminé ; et,
- soustraire en bande de base au moins le signal démodulé, des intervalles de collisions.

Par ailleurs, l'invention vise dans un sixième aspect, un procédé de réception d'un signal transmis via un canal de transmission à accès multiple par répartition dans le temps et/ou en fréquence, le signal comprenant des paquets de données pour lesquels au moins deux répliques de chaque paquet sont transmises. le procédé étant caractérisé en ce qu'il comprend les étapes consistant à :
- déterminer la position d'au moins une des répliques selon un procédé de localisation selon le procédé CRDSA ;
si la détermination donne un résultat selon lequel aucune réplique n'est localisable selon le procédé de localisation selon le procédé CRDSA :
- déterminer la position d'au moins deux répliques selon un procédé selon le quatrième aspect de l'invention ; et,
- décoder le canal de transmission à l'aide du signal reçu selon un procédé de décodage selon le cinquième aspect de l'invention.

En outre, l'invention vise dans un septième aspect, un produit programme d'ordinateur, caractérisé en ce qu'il comprend des instructions de code de programme pour la mise en oeuvre d'un procédé selon au moins un des quatrième, cinquième et sixième aspects de l'invention, lorsque le programme est exécuté sur un ordinateur.

De même, l'invention vise dans un huitième aspect, un support de stockage non-transitoire lisible par ordinateur, stockant un programme d'ordinateur comprenant un jeu d'instructions exécutables par un ordinateur ou un processeur pour mettre en oeuvre d'un procédé selon au moins un des quatrième, cinquième et sixième aspects de l'invention.

### Description sommaire des dessins

D'autres modes de réalisation, buts et avantages de l'invention apparaîtront à la lecture de la description suivante d'un mode de réalisation de l'invention, donné à titre d'exemple non limitatif, en regard des dessins joints sur lesquels :
- la FIG. 1 montre schématiquement un diagramme relatif à une mise en oeuvre du dispositif de localisation selon un mode de réalisation de l'invention ;
- la FIG. 2 montre schématiquement un diagramme d'un exemple de procédé mis en oeuvre par le dispositif de la FIG. 1 ;
- la FIG. 2A montre schématiquement un exemple d'une trame d'un système de communication sans fil ;
- la FIG. 3 montre schématiquement un diagramme relatif à une mise en oeuvre du dispositif de décodage selon un mode de réalisation de l'invention ;
- la FIG. 3A montre schématiquement un exemple la trame de la FIG. 2A après réalisé du procédé de la FIG. 1 ;
- la FIG. 3B montre schématiquement un exemple la trame de la FIG. 3A après réalisé du procédé de la FIG. 3 ;
- la FIG. 4 montre schématiquement un diagramme d'un exemple de procédé mis en oeuvre par le dispositif de la FIG. 3 ;
- la FIG. 5 montre schématiquement un diagramme relatif à une mise en oeuvre du récepteur selon un mode de réalisation de l'invention ; et,
- la FIG. 6 montre schématiquement un diagramme d'un exemple de procédé mis en oeuvre par le dispositif de la FIG. 5.

### Manière(s) de réaliser l'invention

Il est considéré que les principes de fonctionnement d'un système de communication sans fil sont connus de l'homme du métier et ne seront donc pas détaillés davantage ici.

Dans la suite de la description, on considérera le cas d'un système de communication sans fil partagé entre plusieurs utilisateurs. Le canal de transmission est divisé en plusieurs trames successives et possède un accès multiple par répartition dans le temps et/ou en fréquence dans lequel au moins deux répliques de chaque paquet d'un utilisateur sont transmises.

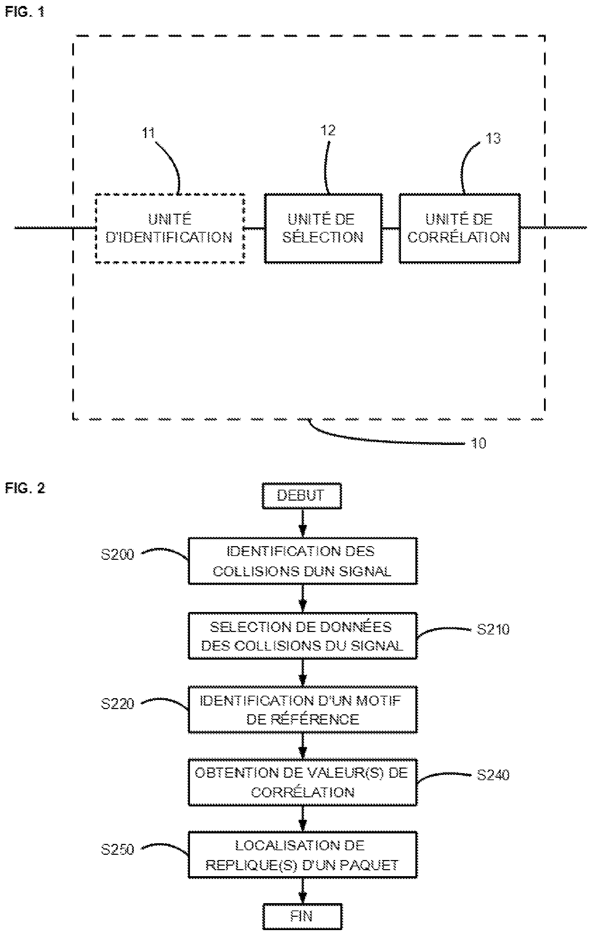

L'exemple de la FIG. 1 comprend un dispositif de localisation 10 comprenant :
- une unité d'identification de collisions 11 ;
- une unité de sélection 12 ; et,
- une unité de corrélation 13.

Le dispositif de localisation 10 est apte à être intégré dans un récepteur capable de recevoir un signal comprenant une pluralité de répliques de paquets de données. L'un des objectifs du dispositif de localisation 10 consiste à déterminer la position d'au moins deux répliques d'un paquet de données transmises via le canal de transmission du système de communication sans fil.

Dans l'exemple de la FIG. 1, l'unité d'identification de collisions 11 est couplée de façon fonctionnelle à l'unité de sélection 12. L'unité d'identification de collisions 11 est configurée pour identifier, à partir d'un signal reçu par le récepteur, l'ensemble des intervalles de temps et/ou de fréquence qui comprennent des collisions destructives, appelés ci-après intervalles de collisions, au moins entre une réplique d'un premier paquet et une réplique d'un second paquet, différent du premier paquet. Une telle unité est déjà connue et ne fait donc pas partie intégrante de l'invention. En effet, l'unité d'identification de collisions 11 sert juste, dans le cadre de cette description, à indiquer que l'on connait à priori la position des intervalles de collisions pour un signal donné. Il est à noter que la notion d'intervalle est également connue sous le nom de créneau en français ou encore de "slot" en anglais.

Dans l'exemple de la FIG. 1, l'unité de sélection 12 est couplée de façon fonctionnelle à l'unité d'identification de collisions 11 et à l'unité de corrélation 13. L'unité de sélection 12 est configurée pour sélectionner tout ou partie des données comprises dans au moins un des intervalles de collisions du signal reçu. Par exemple, les données peuvent être des données complexes. Ces données complexes, peuvent par exemple, avoir été générées à une fréquence supérieure à la bande occupée par le signal reçu. L'unité de sélection 12 est configurée également pour identifier les données sélectionnées comme étant un motif de référence. Comme le motif de référence comprend des données d'un intervalle de collisions, alors il comprend au moins une réplique du premier paquet de données. Le motif de référence va servir à détecter d'autres répliques de ce premier paquet présentes dans les autres intervalles de collisions. En effet, en parcourant l'ensemble des intervalles de collisions il est possible de trouver une corrélation entre le contenu du motif de référence et le contenu d'un des intervalles de collisions grâce à des techniques de corrélation.

Pour cela, dans l'exemple de la FIG. 1 on utilise l'unité de corrélation 13 qui est couplée de façon fonctionnelle à l'unité de sélection 12. L'unité de corrélation 13 est en effet configurée pour obtenir au moins une valeur de corrélation associée à un intervalle de collisions donné, à partir d'un calcul de corrélation entre tout ou partie du motif de référence et tout ou partie des données reçues dans un intervalle de collisions. Par exemple, si l'on considère que le motif de référence comprend L données complexes consécutives alors il est possible d'obtenir une valeur de corrélation en effectuant un calcul de corrélation entre les valeurs conjuguées des L données et *L* données d'un intervalle de collisions donné. Le résultat du calcul de corrélation est la génération d'aucun, un ou plusieurs pics de corrélation indiquant s'il y a corrélation ou pas entre les deux éléments traités dans le calcul. Dans le cas de figure de données complexes, une valeur de corrélation peut correspondre par exemple au module d'un pic de corrélation. Afin de diminuer la complexité d'implémentation de l'unité de corrélation 13, il est possible de prendre seulement en considération un sous-ensemble de *N* données à traiter tel que *N < L.* Le calcul de corrélation pourra, dans une mise en oeuvre, être effectué à partir d'une technique de corrélation glissante dans laquelle les valeurs de corrélation sont obtenues à la donnée près c'est à dire donnée par donnée. Dans une autre mise en oeuvre on pourra utiliser une technique de corrélation non glissante dans laquelle les valeurs de corrélation sont obtenues par blocs de données consécutives c'est à dire blocs par blocs..

Afin de pouvoir rassembler les répliques d'un même paquet, le traitement suivant peut être utilisé. Dans le cadre de données complexes, on peut tout d'abord sélectionner les données associées au pic de corrélation ayant le module le plus élevé en les identifiant comme étant les données de la première réplique d'un premier paquet. A l'aide du conjugué des données de cette première réplique on peut réaliser un calcul de corrélation avec les données des autres pics corrélations. Ainsi, pour S valeurs de corrélation, on effectue *S*-1 calculs de corrélation. A l'issu de ces calculs de corrélation, on garde les données correspondant au pic de corrélation ayant le module le plus élevé en l'identifiant comme étant les données de la deuxième réplique du premier paquet. On effectue de manière itérative ce processus avec les données restantes jusqu'à rassembler une partie ou l'ensemble des répliques d'un même paquet de données. Ainsi l'unité de corrélation 13 est également configurée pour déterminer qu'au moins une des répliques du premier paquet de données est localisée dans un intervalle de collisions donné. Par exemple, si la valeur de corrélation associée à un intervalle de collisions est supérieure à une valeur de corrélation déterminée alors on peut en déduire qu'une réplique du premier paquet se trouve dans cet intervalle. La valeur de corrélation déterminée peut être définie selon les besoins d'implémentation. Néanmoins, l'une de ses caractéristiques est qu'elle doit permettre d'évaluer si une valeur de corrélation représente une intensité significative de la relation entre le contenu du motif de référence et de l'intervalle de collisions en cours. Le nombre de valeurs de corrélation qui peuvent être trouvées dans un intervalle de collisions à l'issu du calcul de corrélation dépend du nombre de répliques qui y sont présentes.

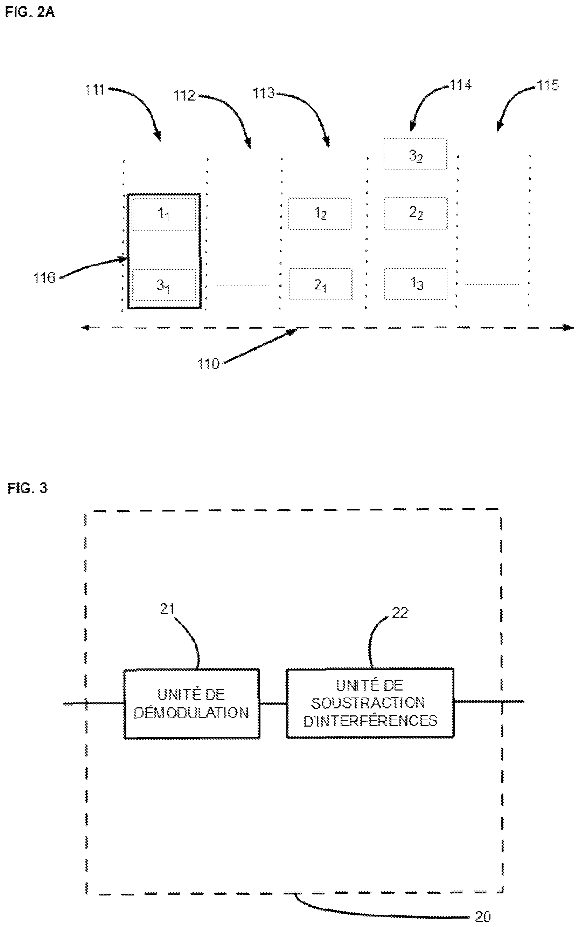

Dans un aspect de l'invention le dispositif de localisation 10 est également configuré pour mettre en oeuvre un procédé illustré par toutes les étapes décrites dans la figure FIG. 2 et qui permet de localiser au niveau d'un récepteur, la position d'au moins deux répliques d'un paquet de données qui sont transmises via un canal de transmission à accès multiple par répartition dans le temps et/ou en fréquence.

Se référant à la FIG. 2, en S200, on identifie, dans un signal reçu par le récepteur, l'ensemble des intervalles de temps et/ou de fréquence comprenant des collisions, au moins entre une réplique d'un premier paquet et une réplique d'un second paquet, différent du premier paquet. En S210, on sélectionne tout ou partie des données comprises dans au moins un des intervalles de collisions du signal. En S220, on identifie les données sélectionnées comme étant un motif de référence comprenant au moins une réplique du premier paquet de données. En S230, on obtiens au moins une valeur de corrélation associée à un intervalle de collisions donné, à partir d'un calcul de corrélation entre tout ou partie du motif de référence et tout ou partie des données reçues dans l'intervalle de collisions. Enfin, en S240, on détermine qu'au moins une des répliques du premier paquet de données est localisée dans l'intervalle de collisions donné si la valeur de corrélation associée est supérieure à une valeur de corrélation déterminée.

Pour bien comprendre le principe de fonctionnement du dispositif de localisation 10, prenons l'exemple d'une trame du canal de communication du système de communication sans fil dont une illustration est donnée à titre d'exemple en FIG. 2A. Dans l'exemple de la FIG. 2A, il est représenté une trame 110 comprenant cinq intervalles de temps et/ou de fréquence 111, 112, 113, 114, 115. Dans l'intervalle 111 se trouve une première réplique d'un premier paquet 1₁ et une première réplique d'un troisième paquet 3₁. Les deux répliques 1₁ et 3₁ sont en collisions et l'intervalle 111 est donc un intervalle de collisions. L'intervalle 112 ne comprend aucune réplique de paquets. Dans l'intervalle 113 se trouve une deuxième réplique du premier paquet 1₂ et une première réplique d'un deuxième paquet 2₁. Les deux répliques 1₂ et 2₁ sont en collisions et l'intervalle 113 est donc un intervalle de collisions. Dans l'intervalle 114 se trouve une deuxième réplique du troisième paquet 3₂, une deuxième réplique du deuxième paquet 2₂ et une troisième réplique du premier paquet 1₃. Les trois répliques 3₂, 2₂ et 1₃ sont en collisions et l'intervalle 114 est donc un intervalle de collisions. L'intervalle 115 quant à lui ne comprend aucune réplique de paquets. Selon l'un des modes de réalisation de l'invention, l'unité de sélection 12 du dispositif de localisation 10 sélectionne tout ou partie des données comprises dans au moins un des intervalles de collisions 111, 113, 114 de la trame 110. Dans l'exemple de la FIG. 2A, ce sont les données de l'intervalle de collision 111 qui sont sélectionnées et qui sont identifiées comme étant un motif de référence 116. Bien sûr le motif de référence aurait pu aussi contenir tout ou partie des données comprises dans au moins une des autres intervalles de collisions 113 et 114. Selon un des modes de réalisation de l'invention, l'unité de corrélation 13 du dispositif de localisation 10 effectue un calcul de corrélation entre tout ou partie du motif de référence et tout ou partie des données d'au moins un des intervalles de collisions 113 et 114 afin d'obtenir une ou plusieurs valeurs de corrélation. Par exemple, le calcul de corrélation entre le motif de référence 116 et l'intervalle de collision 113 permet d'obtenir un pic de corrélation dont on peut calculer une valeur de corrélation. En effet, il est clair qu'il existe une corrélation entre la première réplique du premier paquet 1₁ comprises dans le motif de référence 116 et la deuxième réplique du premier paquet 1₂ qui se trouve dans l'intervalle de collisions 113. Par contre, il existe peu ou pas de corrélation entre la première réplique du troisième paquet 3₁ comprise dans le motif de référence 116 et la deuxième réplique du premier paquet 1₂ ou la deuxième réplique du premier paquet 2₁ qui se trouvent dans l'intervalle de collisions 113 puisque chacun qu'elles correspondent à des répliques de paquets différents. Sur le même principe qui vient d'être décrit, le calcul de corrélation entre le motif de référence 116 et l'intervalle de collisions 114 permet d'obtenir au moins deux valeurs de corrélation. Ainsi, le nombre de valeurs de corrélation qui peuvent être trouvées dans un intervalle de collisions 111, 113, 114 à l'issu du calcul de corrélation dépend du nombre de paquets de données qui y sont présents comme indiqué plus haut. Comme indiqué précédemment les valeurs de corrélation qui sont supérieures à une valeur de corrélation déterminée sont prises en considération par la suite. Ainsi, à l'issu des calculs de corrélation, l'unité de corrélation est capable de déterminer dans quelles intervalles de collisions se trouvent les répliques d'un paquet de données. Ainsi dans l'exemple de la FIG. 2A, l'unité de corrélation 13 est capable de déterminer que le premier paquet de données comprend trois répliques 1₁, 1₂ et 1₃ qui se trouvent respectivement dans les intervalles de collisions 111, 113 et 114. Après qu'au moins deux répliques d'un paquet aient été localisées, il est alors possible de décoder leur contenu.

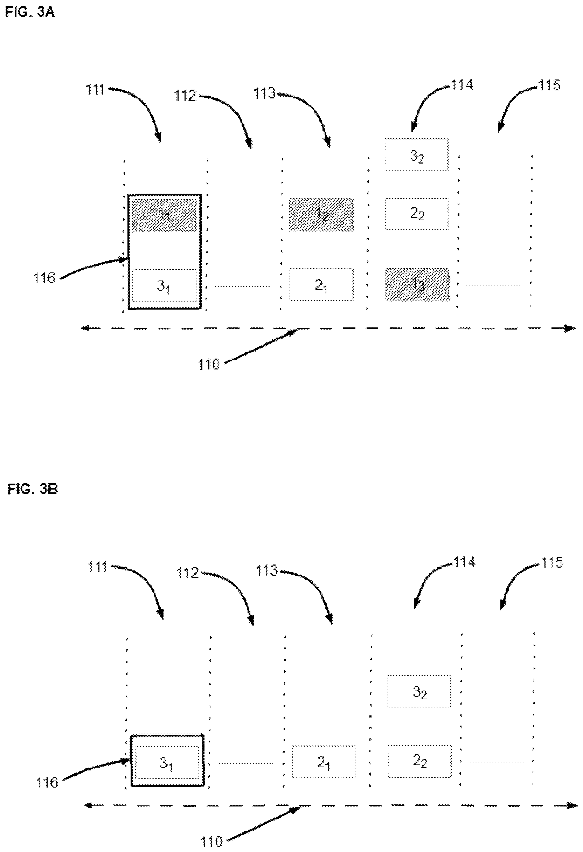

L'exemple de la FIG. 3 comprend un dispositif de décodage 20 comprenant :
- une unité de démodulation 21 ; et,
- une unité de soustraction d'interférences 22.

Le dispositif de décodage 20 est apte à être intégré dans un récepteur capable de recevoir un signal comprenant une pluralité de répliques de paquets de données pour lesquels au moins deux répliques sont transmises. Le dispositif de décodage 20 est également apte à être couplé de façon fonctionnelle au dispositif de localisation 10. L'un des objectifs du dispositif de décodage 20 consiste à décoder le contenu du canal de transmission du système de communication sans fil à partir du signal reçu par le récepteur. Pour cela, il faut que la position d'au moins deux répliques d'un premier paquet soit localisée dans au moins un intervalle de collisions par exemple grâce au dispositif de localisation 10 comme décris précédemment.

Dans l'exemple de la FIG. 3, l'unité de démodulation 21 est couplée de façon fonctionnelle à l'unité de soustraction d'interférences 22. L'unité de démodulation 21 est configurée pour démoduler les signaux correspondant à au moins deux répliques d'un paquet. Par exemple, en se référant à la FIG. 3A, l'unité de démodulation 21 peut démoduler les signaux correspondants aux répliques 1₁, 1₂ et 1₃ du premier paquet qui sont indiquées par des hachures. Pour cela, l'unité de démodulation 21 combine les différentes répliques comprises dans l'interférence pour faciliter le décodage. Une technique classique de combinaison des répliques consiste à faire la somme des signaux contenant les répliques. Ainsi, par exemple, la somme entre les signaux correspondant aux répliques 1₁, 1₂ et 1₃ du premier paquet est plus facile à démoduler que chacun des signaux correspondant aux répliques 1₁, 1₂ et 1₃ pris séparément. En effet, si l'on ajoute les signaux correspondant à des répliques d'un même paquet de données, les données utiles de chacune des répliques vont s'ajouter parfaitement car elles sont corrélées du fait qu'elles sont des copies d'un même paquet. Dans cette somme, les interférences s'ajoutent aussi mais comme elles ne sont corrélées, leur somme devient relativement moins importante par rapport à la somme des signaux correspondant aux données corrélées. Le niveau de bruit peut également être pris en considération dans le processus de démodulation car pour que la somme puisse être démodulée correctement le niveau de ce bruit ne doit pas être au-dessus d'un seuil de bruit déterminé. En effet, au-dessus de seuil de bruit déterminé le bruit est considéré comme étant trop présent empêchant ainsi la démodulation. Dans l'exemple de la FIG. 3A, si la somme entre le motif de référence et les données comprises dans l'intervalle de collisions 113 comprend un niveau de bruit au-dessus du seuil de bruit déterminé, alors l'unité de démodulation 21 est capable d'attendre la localisation d'une autre réplique du paquet en traitement. Par exemple, dans l'exemple de la FIG. 3A, l'unité de démodulation 21 peut attendre que l'unité de localisation 10 ait localisé la troisième réplique du premier paquet 1₃ dans l'intervalle de collisions 114. Ensuite, l'unité de démodulation 21 peut lancer le processus de démodulation du premier paquet à partir de la somme entre le motif de référence et le contenu des intervalles de collisions 113 et 114. Si dans ce cas de figure le niveau bruit présent dans la somme est au-dessus du seuil de bruit déterminé alors l'unité de démodulation 21 peut chercher une d'autres répliques du premier paquet ou lancer le processus de démodulation sur un autre paquet de données qui diffère du premier paquet. Bien sûr, le moment à partir duquel l'unité de démodulation 21 décide d'ajouter de nouvelles données à la somme ou décide de démoduler un autre paquet de données différent du paquet de données en cours de traitement pour cause d'abondance de bruit, peut être configuré selon les besoins.

Dans l'exemple de la FIG. 3, lorsque plusieurs répliques d'un paquet de données ont été démodulées, alors leur contribution en terme de bruit au signal reçu peut être annulée, par exemple grâce à unité de soustraction d'interférences 22. En effet, l'unité de soustraction d'interférences 22 est configurée pour soustraire en bande de base au moins le signal démodulé, des intervalles de collisions de façon à les libérer de tout ou partie de l'interférence qui est présente. Par exemple, l'unité de soustraction d'interférences 22 peut réaliser l'opération de soustraction par l'utilisation d'au moins une technique d'annulation d'interférences successives, SIC, ou une technique d'annulation parallèle des interférences, PIC. En annulant ces interférences, il est alors possible de supprimer toutes les collisions dans un intervalle de sorte qu'il n'y ait plus qu'une réplique dans un intervalle. C'est ce que l'on peut voir à partir de la FIG. 3B, qui correspond à l'état de la FIG. 3A après le traitement produit par l'unité de soustraction d'interférences 22. Dans l'exemple de la FIG. 3B, on considère que le premier paquet a été décodé et que les répliques correspondantes ont été soustraites des intervalles de collisions correspondantes 111, 113 et 114. Ainsi, après le décodage du canal comprenant la trame 110, l'intervalle 111 ne comprend plus de collisions mais seulement une réplique du troisième paquet. Dans l'intervalle 113, il n'y a plus de collisions non plus et seul reste une réplique du deuxième paquet. Enfin, l'intervalle de collisions 114 comprend une collision entre la deuxième réplique du troisième paquet et la deuxième réplique du deuxième paquet.

Afin de réaliser correctement l'ensemble des opérations décrites ci-dessous, l'unité de démodulation est en outre configurée pour estimer et/ou corriger un certain nombre de paramètres associés aux répliques. Tout d'abord, l'unité de démodulation est configurée pout affiner, si nécessaire, la position des répliques. Par, exemple, les échantillons correspondants aux trois répliques d'un paquet de données peuvent être sur-échantillonnés et de nouvelles corrélations peuvent être calculées afin d'affiner la position relative des répliques. L'unité de démodulation est en outre configurée pour estimer l'écart de fréquence porteuse. Pour cela, on peut par exemple utiliser la moyenne des arguments des fonctions d'autocorrélation correspondantes aux trois répliques du paquet de données, comme indiqué dans le document de J.J. van de Beek, M. Sandell, et P.O. Borjesson, "ML Estimation of Time and Frequency Offset in OFDM Systems", IEEE Transactions on Signal Processing, vol. 45, no. 7, pp. 1800-1805,July 1997. Par la suite, on peut alors effectuer une correction de fréquence sur les trois répliques. L'unité de démodulation est également configurée pour effectuer une sommation cohérente des trois répliques afin d'obtenir une nouvelle réplique que l'on peut appeler "réplique somme" ou "somme" comme indiqué plus haut. L'unité de démodulation est en outre configurée pour rechercher le mot de début de réplique de la réplique somme. L'unité de démodulation est aussi configurée pour estimer l'instant optimal d'échantillonnage de la réplique somme. Par exemple, on peut utiliser pour cette opération un algorithme classique tel celui basé sur l'estimateur Oerder et Meyer comme décrit dans le document *"*Digital filter and square timing recovery", IEEE Trans. Commun., vol. 36, no. 5, pp. 605-612, May 1988. Enfin, l'unité de démodulation est en outre configurée pour estimer une erreur de phase porteuse de la réplique somme. Cette opération peut être effectuée grâce à l'utilisation d'un algorithme classique tel celui basé sur l'estimateur de Viterbi et Viterbi comme décrit dans le document *"*Nonlinear estimation of PSK-modulated carrier phase with application to burst digital transmission", IEEE Transactions on Information Theory, Jul 1983, Volume: 29, Issue: 4, Page(s): 543 - 551. Ainsi, en sortie de ces opérations d'estimation et/ou de correction de paramètres on obtient trois paquets d'échantillons démodulés à un échantillon par symbole (i.e., un paquet correspondant au motif, un paquet correspondant à la première réplique et un paquet correspondant à la deuxième réplique)..

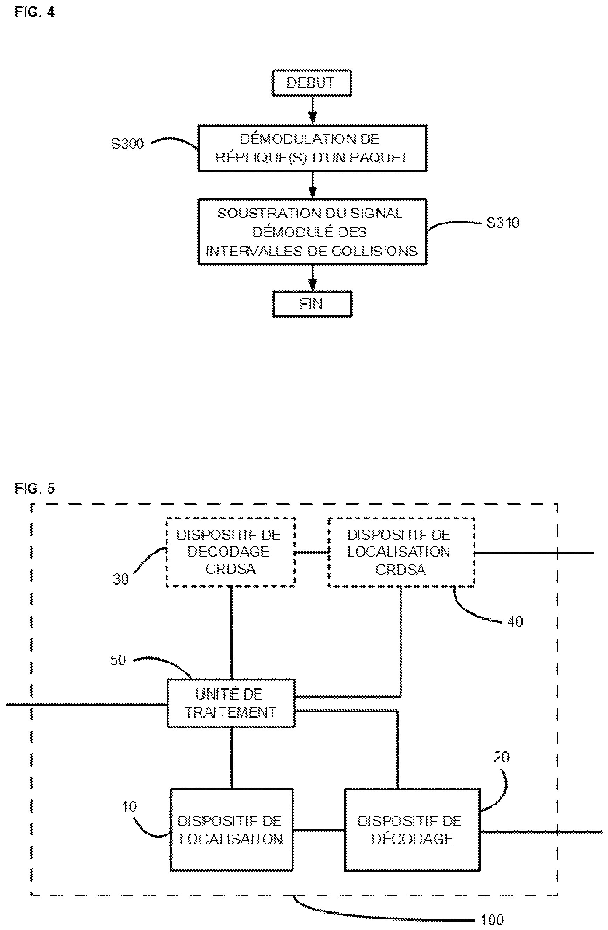

Dans un autre aspect de l'invention le dispositif de décodage 20 est également configuré pour mettre en oeuvre un procédé illustré par toutes les étapes décrites dans la figure FIG. 4 et qui permet de décoder au niveau d'un récepteur, un canal de transmission à accès multiple par répartition dans le temps et/ou en fréquence à partir d'un signal reçu par le récepteur et comprenant une pluralité de répliques de paquets de données dans laquelle au moins deux répliques de chaque paquet sont transmises et la position d'au moins deux répliques d'un premier paquet a été localisée, à partir du signal reçu, par un procédé de localisation selon l'invention dans au moins un intervalle de collisions.

Se référant à la FIG. 4, en S300, on démodule au moins deux répliques d'un premier paquet, à partir d'une somme entre un signal correspondant au motif de référence et au moins un signal correspondant aux données comprises dans l'intervalle de collisions utilisé dans le calcul de corrélation, lorsque la somme comprend un niveau de bruit situé au-dessous d'un seuil de bruit déterminé. Enfin, en S310, on soustrait en bande de base au moins le signal démodulé, des intervalles de collisions.

Dans l'exemple de la FIG. 5, le dispositif de localisation 10 et le dispositif de décodage 20 sont couplés de façon fonctionnelle entre eux au sein d'un récepteur 100. Le récepteur 100 comprend également une unité de traitement 50 tel un processeur ou dispositif équivalent, couplé de façon fonctionnelle au dispositif de localisation 10 et le dispositif de décodage 20. L'unité de traitement 50 est notamment configurée pour recevoir le signal et contrôler les éléments du récepteur 100. Dans un mode de réalisation, le récepteur 100 peut également comprendre un dispositif de décodage 30 et un dispositif de localisation 40, tous deux fonctionnant selon le procédé CDRSA et couplés de façon fonctionnelle entre eux ainsi qu'à l'unité de traitement 50. Dans une configuration de cette mise en oeuvre, le dispositif de décodage CRDSA 30 et le dispositif de localisation CRDSA 40 sont activés, par exemple par l'unité de traitement 50, tandis que le dispositif de localisation 10 et le dispositif de décodage 20 sont désactivés. Cette configuration peut être utilisée dans un cas de figure où il n'y aurait au moins intervalle sans collisions. En effet, avec au moins un intervalle sans collisions les dispositifs selon le procédé CRDSA sont, dans une certaine mesure, aptes à décoder et localiser les répliques d'un paquet de données. Néanmoins, en cas de présence de collisions sur l'ensemble des intervalles, les dispositifs selon le procédé CRDSA sont en situation de blocage, car non décodable et donc inutilisable. Ainsi, dans ce cas de figure, une autre configuration peut être mise en oeuvre dans laquelle le dispositif de décodage CRDSA 30 et le dispositif de localisation CRDSA 40 sont désactivés tandis que le dispositif de localisation 10 et le dispositif de décodage 20 sont activés.

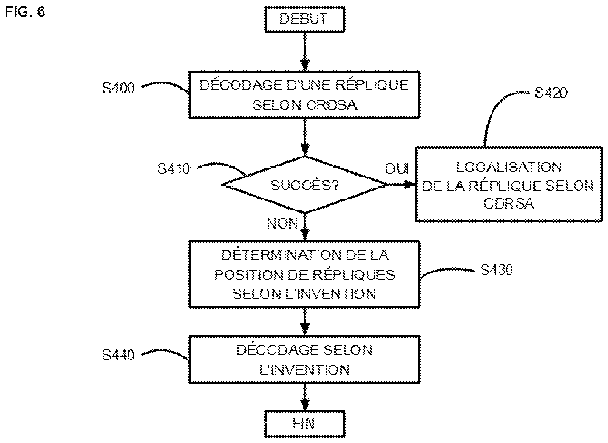

Dans un autre aspect de l'invention le récepteur 100 est également configuré pour mettre en oeuvre un procédé illustré par toutes les étapes décrites dans la figure FIG. 6 et qui permet de recevoir un signal transmis via un canal de transmission à accès multiple par répartition dans le temps et/ou en fréquence, le signal comprenant des paquets de données pour lesquels au moins deux répliques de chaque paquet sont transmises. Se référant à la FIG. 6, en S400, on décode au moins une des répliques selon un procédé de décodage selon le procédé CRDSA. En S410, on vérifie si le décodage précédent a fonctionné. Si c'est le cas en S420, on localise la position des autres répliques selon le procédé de localisation CRDSA. Si ce n'est pas le cas, en S430 on détermine la position d'au moins deux répliques selon un procédé selon l'invention. Enfin, en S440, on décode le canal de transmission à l'aide du signal reçu selon le procédé de décodage selon l'invention.

Dans un des aspects de l'invention, le procédé de localisation et le procédé de décodage selon l'invention peuvent être mis en oeuvre par des instructions de code d'un programme d'ordinateur.

Dans un autre aspect de l'invention, le procédé de localisation et le procédé de décodage selon l'invention peuvent être stockés sur un support de stockage non-transitoire lisible par ordinateur sous la forme d'un programme d'ordinateur comprenant un jeu d'instructions exécutables par un ordinateur ou un processeur.

Il est précisé que l'ordre des étapes des procédés, objet de l'invention, peuvent être modifié selon les besoins. Par exemple, il est possible de procéder à la localisation et au décodage des répliques d'un paquet à la fois de façon aléatoire mais il également possible de localiser les répliques de tous les paquets d'une trame puis de les décoder en commençant, par exemple, par les répliques du paquet qui a été localisé avec la probabilité la plus grande.

Les exemples divulgués ci-dessus et les formes de réalisations particulières représentées dans les figures doivent être compris comme une illustration des principes de la présente invention, et ne devraient pas être interprétés comme une limitation de son but, la portée duquel est uniquement définie par les revendications ci-jointes.

Par exemple, le dispositif de localisation et le dispositif de décodage ont été présentés comme étant des éléments séparés, mais peuvent tout à fait être compris d'un même dispositif.

Par exemple, l'invention a été présentée comme pouvant être mise en oeuvre dans un récepteur comportant des dispositifs fonctionnant selon le procédé CRDSA, mais il va de soi que l'invention peut également être mise oeuvre dans un récepteur avec d'autres dispositifs fonctionnant sur des bases communes tels ceux fonctionnant selon le procédé CRDSA++ ou encore IRSA (Irregular Répétition Slotted ALOHA, en anglais).

L'invention peut, par exemple, être mise en oeuvre dans un système de communication sans fil de type satellitaire similaire à ceux utilisés dans les communications aéronautiques ou dans les communications par satellite pour les télécommunications. L'invention peut dans ce cadre être intégrée sur une voie retour d'un tel système comme par exemple dans le standard DVB-RCS2. Dans ce cas de figure, le dispositif de localisation et le dispositif de décodage peuvent être implémentés, au choix, au niveau du terminal, du relais embarqué dans le satellite ou au niveau de la passerelle. Dans le cas où le relais implémente les dispositifs selon l'invention, le protocole de type "décodage puis retransmission" peut être utilisé, par exemple. Avec ce protocole, le relais récupère tous les paquets décodés, reconstruit des signaux et les diffuse vers les terminaux de même façon que sur la liaison aller. Dans le cas où les terminaux implémentent les dispositifs selon l'invention, le relais ne fait qu'amplifier et retransmettre la trame.

## Revendications

1. Dispositif de localisation (10) au niveau d'un récepteur (100), de la position d'au moins deux répliques (1₁, 1₂, 1₃, 2₁, 2₂, 3₁, 3₂) d'un paquet de données qui sont transmises via un canal de transmission à accès multiple par répartition dans le temps et/ou en fréquence, le dispositif comprenant :
- une unité d'identification (11) de collisions configurée pour identifier, dans un signal reçu par le récepteur, l'ensemble des intervalles de temps et/ou de fréquence comprenant des collisions destructives, appelés ci-après intervalles de collisions, au moins entre une réplique d'un premier paquet de données et une réplique d'un second paquet de données, différent du premier paquet de données;
le dispositif comprenant en outre:
- une unité de sélection (12) configurée pour :
- sélectionner tout ou partie des données comprises dans au moins un premier intervalle de collisions parmi les intervalles de collisions identifiés ;
- identifier les données sélectionnées dans le premier intervalle de collisions comme étant un motif de référence;
- une unité de corrélation (13) configurée pour :
- obtenir au moins une valeur de corrélation associée à au moins un second intervalle de collisions donné différent du premier intervalle de collisions, à partir d'un calcul de corrélation entre tout ou partie du motif de référence et tout ou partie des données reçues dans le second intervalle de collisions ; et,
- déterminer qu'au moins une des répliques du premier paquet de données ou du second paquet de données est localisée dans le second intervalle de collisions si la valeur de corrélation associée est supérieure à un seuil de corrélation déterminé.

2. Dispositif selon la revendication 1, **caractérisé en ce que** l'unité de corrélation est en outre configuré pour effectuer le calcul de corrélation, en bande de base, par l'utilisation d'au moins une technique de corrélation glissante ou une technique de corrélation non-glissante.

3. Dispositif selon l'une quelconque des revendications 1 ou 2, ledit dispositif étant en outre couplé à un dispositif de décodage (20) comprenant :
- une unité de démodulation (21) configurée pour démoduler les signaux correspondant à au moins deux répliques du premier paquet de données ou du second paquet de données, à partir d'une somme entre un signal correspondant au motif de référence et au moins un signal correspondant aux données comprises dans l'intervalle de collisions utilisé dans le calcul de corrélation, lorsque la somme comprend un niveau de bruit situé au-dessous d'un seuil de bruit déterminé ; et,
- une unité de soustraction d'interférences (22) couplée de façon fonctionnelle à l'unité de démodulation et configurée pour soustraire en bande de base au moins le signal démodulé, des intervalles de collisions.

4. Dispositif selon la revendication 3, **caractérisé en ce que** l'unité de démodulation est en outre configurée pour ajouter à la somme, les données comprises dans au moins un des intervalles de collisions comprenant une ou plusieurs des autres répliques de premier paquet et localisées par le dispositif de localisation selon la revendication 1.

5. Dispositif selon les revendications 3 à 4, **caractérisé en ce que** l'unité de démodulation est en outre configurée pour estimer des paramètres de fréquence, de temporisation, de phase et d'amplitude de chaque réplique à partir d'au moins la somme.

6. Récepteur (100) adapté pour recevoir un signal transmis via un canal de transmission à accès multiple par répartition dans le temps et/ou en fréquence, le signal comprenant des paquets de données pour lesquels au moins deux répliques de chaque paquet de données sont transmises, le récepteur étant **caractérisé en ce qu'**il comprend :
- un dispositif de localisation (10) selon les revendications 1 à 5; et,
- une unité de traitement (50) couplé de façon fonctionnelle au dispositif de localisation et configuré pour recevoir le signal.

7. Récepteur selon la revendication 6, **caractérisé en ce qu'**il comprend en outre :
- un dispositif de décodage (30) selon le procédé Contention Resolution Diversity Slotted Aloha, CDRSA, et couplé de façon fonctionnelle à l'unité de traitement.

8. Récepteur selon la revendication 7, **caractérisé en ce que** l'unité de traitement est en outre configurée pour :
- activer le dispositif de décodage CRDSA ; et,
- désactiver le dispositif de localisation et le dispositif de décodage, tant que le signal reçu comprend au moins un intervalle de temps et/ou de fréquence sans collisions destructives.

9. Récepteur selon les revendications 7 à 8, **caractérisé en ce que** l'unité de traitement est en outre configurée pour :
- activer le dispositif de localisation et le dispositif de décodage ; et,
- désactiver le dispositif de décodage CRDSA, tant que le signal reçu ne comprend que des intervalles de collisions.

10. Procédé de localisation au niveau d'un récepteur, de la position d'au moins deux répliques d'un paquet de données qui sont transmises via un canal de transmission à accès multiple par répartition dans le temps et/ou en fréquence, le procédé comprenant l'étape consistant à :
- identifier (S200), dans un signal reçu par le récepteur, l'ensemble des intervalles de temps et/ou de fréquence comprenant des collisions destructives, appelés ci-après intervalles de collisions, au moins entre une réplique d'un premier paquet de données et une réplique d'un second paquet de données, différent du premier paquet de données;
le procédé de localisation comprenant les étapes supplémentaires consistant à :
- sélectionner (S210) tout ou partie des données comprises dans au moins un premier intervalle de collisions parmi les intervalles de collisions identifiés ;
- identifier (S220) les données sélectionnées dans le premier intervalle de collisions comme étant un motif de référence;
- obtenir (S240) au moins une valeur de corrélation associée à au moins un second intervalle de collisions donné différent du premier intervalle de collisions, à partir d'un calcul de corrélation entre tout ou partie du motif de référence et tout ou partie des données reçues dans le second intervalle de collisions ;
- déterminer (S250) qu'au moins une des répliques du premier paquet de données ou du second paquet de données est localisée dans le second intervalle de collisions donné si la valeur de corrélation associée est supérieure à une valeur de corrélation déterminée.

11. Procédé selon la revendication 10 comprenant en outre les étapes consistant à:
- démoduler (S300) les signaux correspondant à au moins deux répliques du premier paquet ou du second paquet de données, à partir d'une somme entre un signal correspondant d'un motif de référence et au moins un signal correspondant aux données comprises dans de collisions utilisé dans le calcul de corrélation, lorsque la somme comprend un niveau de bruit situé au-dessous d'un seuil de bruit déterminé ; et,
- soustraire (S310) en bande de base au moins le signal démodulé, des intervalles de collisions.

12. Procédé de réception d'un signal transmis via un canal de transmission à accès multiple par répartition dans le temps et/ou en fréquence, le signal comprenant des paquets de données pour lesquels au moins deux répliques de chaque paquet de données sont transmises, le procédé étant **caractérisé en ce qu'**il comprend les étapes consistant à :
- déterminer (S400) la position d'au moins une des répliques selon un procédé de localisation selon le procédé CRDSA ;
si la détermination donne un résultat selon lequel aucune réplique n'est localisable selon le procédé de localisation selon le procédé CRDSA :
- déterminer (S430) la position d'au moins deux répliques selon un procédé selon la revendication 10 ; et,
- décoder (S440) le canal de transmission à l'aide du signal reçu selon un procédé de décodage selon la revendication 11.

13. Produit programme d'ordinateur, **caractérisé en ce qu'**il comprend des instructions de code de programme pour la mise en oeuvre d'un procédé selon au moins une des revendications 10 à 12, lorsque le programme est exécuté sur un ordinateur.

14. Support de stockage non-transitoire lisible par ordinateur **caractérisé en ce qu'**il stocke un programme d'ordinateur comprenant un jeu d'instructions exécutables par un ordinateur ou un processeur pour mettre en oeuvre d'un procédé selon au moins une des revendications 10 à 13.

## Patentansprüche

1. Vorrichtung (10) zum Lokalisieren auf Empfängerebene (100) der Position von mindestens zwei Wiederholungen (1₁, 1₂, 1₃, 2₁, 2₂, 3₁, 3₂) eines Datenpaketes, die über einen Übertragungskanal mit Mehrfachzugriff verteilt über die Zeit und/oder die Frequenz übertragen werden, wobei die Vorrichtung aufweist:
- eine Einheit zum Identifizieren (11) von Kollisionen, welche ausgebildet ist um in einem Signal, welches durch den Empfänger empfangen wurde, die Gesamtheit der Intervalle von Zeit und/oder Frequenz zu identifizieren, welche destruktive Kollisionen aufweisen, im Folgenden als Kollisionsintervalle bezeichnet, zumindest zwischen einem Wiederholen eines ersten Datenpaketes und eines zweiten Datenpaketes, welches unterschiedlich zum ersten Datenpaket ist;
wobei die Vorrichtung des Weiteren aufweist:
- eine Auswahleinheit (12), ausgebildet um:
- alle oder einen Teil der Daten, welche in mindestens einem ersten Kollisionsintervall aus den identifizierten Kollisionsintervallen beinhaltet sind, auszuwählen;
- Identifizieren der ausgewählten Daten in dem ersten Kollisionsintervall, welche ein Referenzmuster aufweisen;
- eine Korrelationseinheit (13), ausgebildet um:
- mindestens einen Korrelationswert zu erhalten, welcher mit mindestens einem zweiten Kollisionsintervall assoziiert ist, welches unterschiedlich zum ersten Kollisionsintervall ist, vor einer Berechnung der Korrelierung zwischen allen oder einem Teil der Referenzmuster und allen oder einem Teil der im zweiten Kollisionsintervall empfangenen Daten; und
- mindestens einer der Wiederholungen des ersten Datenpaketes oder des zweiten Datenpaktes, welche im zweiten Kollisionsintervall lokalisiert ist zu bestimmen, wenn der Kollisionswert, welcher damit assoziiert ist, über einen festgelegten Kollisionsschwellwert ist.

2. Vorrichtung nach Anspruch 1,
**dadurch gekennzeichnet,**
**dass** die Korrelationseinheit des Weiteren konfiguriert ist, um die Korrelation im Basisband unter Verwendung mindestens einer gleitenden Korrelationstechnik oder einer nicht-gleitenden Korrelationstechnik zu berechnen.

3. Vorrichtung nach Ansprüche 1 oder 2,
wobei die Vorrichtung des Weiteren an eine Dekodiervorrichtung (20) gekoppelt ist, welche aufweist:
- eine Demolationseinheit (21), welche konfiguriert ist zum Demolieren der Signale, welche zumindest zwei Wiederholungen des ersten Datenpaketes oder des zweiten Datenpaketes entsprechen, vor einer Summation zwischen einem Signal, welches mit einem Referenzmuster korrespondiert und mindestens einem Signal, welches mit Daten korrespondiert, welche in einem Korrelationsintervall vorhanden sind, welches verwendet wurde während der Korrelationsberechnung, wobei die Summe ein Rauschniveau beinhaltet, welches unterhalb eines festgelegten Rauschschwellwerts ist; und
- eine Interferenz-Subtraktionseinheit (22), die funktionell mit der Demolationseinheit gekoppelt ist und ausgelegt ist zum Subtrahieren auf dem Basisband mindestens eines demolierten Signals der Kollisionsintervalle.

4. Vorrichtung nach Anspruch 3,
**dadurch gekennzeichnet,**
**dass** die Demolationseinheit des Weiteren konfiguriert ist, um zu der Summe die Daten, welche mindestens in einem in dem Kollisionsintervall beinhaltet sind, welche eine oder mehrere von weiteren Antworten des ersten Paketes beinhalten und durch die Vorrichtung zur Lokalisierung nach Anspruch 1 lokalisiert wurden, hinzuzufügen.

5. Vorrichtung nach einem der Ansprüche 3 bis 4,
**dadurch gekennzeichnet,**
**dass** die Demolationseinheit des Weiteren konfiguriert ist, um die Parameter der Frequenz, der Verzögerung, der Phase der Amplitude von jeder Antwort vor zumindestens der Summe zu schätzen.

6. Empfänger (100), der ausgestaltet ist, um ein Signal zu empfangen, welches über einen Übertragungskanal mit Mehrfachzugriff, verteilt über Zeit und/oder die Frequenz ist, wobei das Signal Datenpakete enthält für die mindestens zwei Wiederholungen für jedes Datenpaket für jedes Datenpaket übertragen sind, wobei der Empfänger dadurch charakterisiert ist, dass er aufweist:
eine Vorrichtung zum Lokalisieren (10) nach einem der Ansprüche 1 bis 5; und
- eine Verarbeitungseinheit (50), welche funktionell mit der Vorrichtung zum Lokalisieren gekoppelt ist und zum Empfangen des Signals konfiguriert ist.

7. Empfänger nach Anspruch 6,
**dadurch gekennzeichnet,**
**dass** er des Weiteren aufweist:
- eine Vorrichtung zum Dekodieren (30) die nach dem Contention Resolution Diversity Slotted Aloha, CDRSA, dekodiert und funktionell mit der Verarbeitungseinheit gekoppelt ist.

8. Empfänger nach Anspruch 7,
**dadurch gekennzeichnet,**
**dass** die Verarbeitungseinheit des Weiteren konfiguriert ist um:
- die CRDSA-Dekodiervorrichtung zu aktivieren; und
- die Vorrichtung zum Lokalisieren und der Dekodiervorrichtung zu deaktivieren, wenn das empfangene Signal mindestens ein Intervall in der Zeit und/oder der Frequenz ohne destruktive Kollisionen enthält.

9. Empfänger nach einem der Ansprüche 7 oder 8,
**dadurch gekennzeichnet,**
**dass** die Einheit durch Verarbeitung des Weiteren ausgelegt ist, um
- die Vorrichtung zum Lokalisieren und die Dekodiervorrichtung zu aktivieren; und
- die Vorrichtung zur CRDSA-Dekodiervorrichtung zu deaktivieren, wenn das Empfangssignal keine Kollisionsintervalle enthält.

10. Verfahren zum Lokalisieren auf Empfängerebene der Position von mindestens zwei Wiederholungen eines Datenpaketes, die über einen Übertragungskanal mit Mehrfachzugriff verteilt über die Zeit und/oder die Frequenz übertragen werden, wobei das Verfahren die Schritte aufweist mit:
- Identifizieren (S200) in einem durch den Empfänger empfangen Signal die Gesamtheit der Intervalle von Zeit und/oder Frequenz, die destruktive Kollisionen enthalten, im Folgenden als Kollisionsintervalle bezeichnet, zumindest zwischen einer Wiederholung eines ersten Datenpaketes und einer Wiederholung eines zweiten Datenpaketes, welches unterschiedlich zum ersten Datenpaketes ist;
wobei das Verfahren zum Lokalisieren zusätzlich die Schritte aufweist:
- Auswählen (S210) aller oder eines Teiles der Daten, welche mindestens in einem ersten Kollisionsintervall aus identifizierten Kollisionsintervallen beinhaltet sind;
- Identifizieren (S220) der ausgewählten Daten in dem ersten Kollisionsintervall, welche ein Referenzmuster aufweisen;
- Erhalten (S240) mindestens eines Korrelationswert, welcher mit mindestens einem zweiten Kollisionsintervall assoziiert ist, welches unterschiedlich zum ersten Kollisionsintervall ist, vor einer Berechnung der Korrelierung zwischen allen oder einem Teil der Referenzmuster und allen oder einem Teil der Daten, welche in dem zweiten Kollisionsintervall empfangen wurden;
- Bestimmen (S250) mindestens einer der Wiederholungen des ersten Datenpaketes oder des zweiten Datenpaketes, welche im zweiten Kollisionsintervall lokalisiert ist, wenn der Korrelationswert, welcher damit assoziiert ist, über einem festgelegten Korrelationswert liegt.

11. Verfahren nach Anspruch 10,
des Weiteren die Schritte aufweisend:
- Demodulieren (S300) der Signale, welche mindestens zwei Wiederholungen des ersten Datenpaketes oder des zweiten Datenpaketes entsprechen, vor einer Summation zwischen einem Signal, welches mit einem ersten Referenzmuster korrespondiert und mindestens einem Signal, welches mit Daten korrespondiert, welche in der Kollision vorhanden sind, welche in der Berechnung der Korrelation verwendet wurden, wobei die Summe ein Rauschniveau beinhaltet, welches unterhalb eines festgelegten Rauschschwellwertes liegt; und
- Substrahieren (S310) auf dem Basisband mindestens ein demoduliertes Signal der Kollisionsintervalle.

12. Empfangsverfahren eines Signals, welches über einen Übertragungskanal mit Mehrfachzugriff verteilt über die Zeit und/oder die Frequenz übertragen wurde, wobei das Signal Datenpakete aufweist, für welche mindestens zwei Wiederholungen des Datenpaketes übertragen wurden, wobei das Verfahren **dadurch gekennzeichnet ist,**
**dass** es die Schritte aufweist:
- Bestimmen (S400) der Position mindestens einer der Wiederholungen nach einem Lokalisierungsverfahren nach CRDSA;
wobei wenn das Bestimmen ein Resultat liefert nachdem keine Wiederholung nach dem Lokalisierungsverfahren nach dem Verfahren CRDSA lokalisierbar ist:
- Bestimmen (S430) der Position von mindestens zwei Wiederholungen nach einem Verfahren nach Anspruch 10; und
- Dekodieren (S440) des Übertragungskanals unter Zuhilfenahme eines Signals, welches nach einem Dekodierungsverfahren nach Anspruch 11 empfangen wurde.

13. Computerprogrammprodukt,
**dadurch gekennzeichnet,**
**dass** es Programmiercodeanweisungen zum Implementieren eines Verfahrens mindestens eines der Ansprüche 10 bis 12 beinhaltet, wenn das Programm auf einem Rechner ausgeführt wird.

14. Nicht-flüchtiges Speichermedium, lesbar durch einen Rechner,
**dadurch gekennzeichnet,**
**dass** es ein Rechnerprogramm speichert, welches eine Reihe von Anweisungen beinhaltet, welche ausführbar durch den Rechner oder einen Prozessor sind, um ein Verfahren nach mindestens einem der Ansprüche 10 bis 13 zu implementieren.

## Claims

1. Device (10) for locating, at a receiver (100), the position of at least two replicas (1₁, 1₂, 1₃, 2₁, 2₂, 3₁, 3₂) of a data packet which are transmitted via a time and/or frequency division multiple access transmission channel, the device comprising:
- a collision identification unit (11) configured to identify, in a signal received by the receiver, the set of time and/or frequency intervals comprising destructive collisions, hereinafter referred to as collision intervals, at least between a replica of a first data packet and a replica of a second data packet, different from the first data packet; the device further comprising:
- a selection unit (12) configured for:
- selecting all or part of the data comprised within at least one first collision interval among the identified collision intervals;
- identifying the data selected in the first collision interval as being a reference pattern;
- a correlation unit (13) configured for:
- obtaining at least one correlation value associated with at least one given second collision interval that is different from the first collision interval, based on a calculation of the correlation between all or part of the reference pattern and all or part of the data received in the second collision interval; and
- determining that at least one of the replicas of the first data packet or of the second data packet is located within the second collision interval if the associated correlation value is greater than a determined correlation threshold.

2. Device according to claim 1, **wherein** the correlation unit is further configured to carry out the baseband correlation calculation by using at least one sliding correlation technique or a non-sliding correlation technique.

3. Device according to one of claims 1 and 2, said device further being coupled to a decoding device (20) comprising:
- a demodulation unit (21) configured to demodulate the signals corresponding to at least two replicas of the first data packet or of the second data packet, from a sum of a signal corresponding to the reference pattern and at least one signal corresponding to the data comprised within the collision interval used in the correlation calculation, when the sum includes a noise level below a determined noise threshold; and,
- an interference subtraction unit (22) operatively coupled to the demodulation unit and configured to subtract at least the demodulated signal from the collision intervals, in baseband.

4. Device according to claim 3, **wherein** the demodulation unit is further configured to add to the sum the data comprised within at least one of the collision intervals comprising one or more of the other replicas of the first packet and located by the location device according to claim 1.

5. Device according to claims 3 to 4, **wherein** the demodulation unit is further configured to estimate frequency, timing, phase, and amplitude parameters of each replica from at least the sum.

6. Receiver (100) adapted to receive a signal transmitted via a time and/or frequency division multiple access transmission channel, the signal comprising data packets for which at least two replicas of each data packet are transmitted, the receiver being **characterized in that** it comprises:
- a location device (10) according to claims 1 to 5; and,
- a processing unit (50) operatively coupled to the location device and configured to receive the signal.

7. Receiver according to claim 6, **wherein** it further comprises:
- a device (30) for decoding according to the Contention Resolution Diversity Slotted Aloha method (CDRSA), and operatively coupled to the processing unit.

8. Receiver according to claim 7, **wherein** the processing unit is further configured for:
- activating the CRDSA decoding device; and,
- deactivating the location device and the decoding device, as long as the received signal comprises at least one time and/or frequency interval without destructive collisions.

9. Receiver according to claims 7 to 8, **wherein** the processing unit is further configured for:
- activating the location device and the decoding device; and,
- deactivating the CRDSA decoding device, as long as the received signal comprises only collision intervals.

10. Method for locating, at a receiver, the position of at least two replicas of a data packet which are transmitted via a time and/or frequency division multiple access transmission channel, the method comprising the step of:
- identifying (S200), in a signal received by the receiver, the set of time and/or frequency intervals comprising destructive collisions, hereinafter referred to as collision intervals, at least between a replica of a first data packet and a replica of a second data packet, different from the first data packet;
the method comprising the additional steps of:
- selecting (S210) all or part of the data comprised within at least one first collision interval among the identified collision intervals;
- identifying (S220) the data selected in the first collision interval as being a reference pattern;
- obtaining (S240) at least one correlation value associated with at least one given second collision interval that is different from the first collision interval, based on a calculation of the correlation between all or part of the reference pattern and all or part of the data received in the second collision interval;
- determining (S250) that at least one of the replicas of the first data packet or of the second data packet is located within the given second collision interval if the associated correlation value is greater than a determined correlation value.

11. Method according to claim 10, further comprising the steps of:
- demodulating (S300) the signals corresponding to at least two replicas of the first data packet or of the second data packet, from a sum of a signal corresponding to a reference pattern and at least one signal corresponding to the data comprised in collisions used in the correlation calculation, when the sum includes a noise level below a determined noise threshold; and,
- subtracting (S310) at least the demodulated signal from the collision intervals, in baseband.

12. Method for receiving a signal transmitted via a time and/or frequency division multiple access transmission channel, the signal comprising data packets for which at least two replicas of each data packet are transmitted, the method being **characterized in that** it comprises the steps of:
- determining (S400) the position of at least one of the replicas by means of a location method based on the CRDSA method;
if the determination yields a result according to which no replica can be located by means of the location method based on the CRDSA method:
- determining (S430) the position of at least two replicas by means of a method according to claim 10; and,
- decoding (S440) the transmission channel using the received signal, by means of a decoding method according to claim 11.

13. Computer program product, **characterized in that** it comprises program code instructions for implementing a method according to at least one of claims 10 to 12 when the program is executed on a computer.

14. Computer-readable non-transient storage medium **characterized in that** it stores a computer program comprising a set of instructions executable by a computer or a processor to implement a method according to at least one of claims 10 to 13.
